# EUROPEAN PATENT APPLICATION

(11) **EP 4 826 213 A1**
(43) Date of publication of application: **21.10.2026**
(21) Application number: 26173150.9
(22) Date of filing: 17.04.2026
(51) Int. Cl.: F01D 5/28, F01D 9/04

(54) **INTEGRATED AIRFOIL-PLATFORM AND METHOD**

(30) Priority: 17.04.2025 US 202519182332
(71) Applicant: RTX Corporation, Farmington, CT 06032 (US)
(72) Inventor: READ, Kathryn S., Marlborough, 06447 (US); GAO, Cheng, South Glastonbury, 06073 (US); BURDETTE, Alyson T., Gilbertsville, 19525 (US); LILES, Howard J., Newington, 06111 (US); SIMPSON, Benjamin B., Rogersville, 37857 (US)
(74) Representative: Dehns

(57) **Abstract**

A ceramic matrix composite (CMC) component or a preform for making a CMC component may be provided. The component or preform may comprise: a first platform having a first gaspath proximal surface and a first gaspath distal surface; an airfoil extending from the first platform, the airfoil having a first gaspath proximal surface and a first gaspath distal surface; and the first platform comprising one or more ply, wherein at least one of the one or more ply is at least one wrapped ply or is at least one tucked ply; the airfoil comprising one or more ply, wherein at least one of the one or more ply is at least one tucked ply or is at least one wrapped ply. Methods for fabrication may be provided.

## Description

### FIELD OF THE INVENTION

The subject matter disclosed herein relates to composite architectures, and, in particular, relates to ceramic matrix composite airfoils with platform(s) and methods of fabrication thereof.

### BACKGROUND OF THE INVENTION

Gas turbine engines or jet engines, in general, include a fan section, a compressor section, a combustion section, and a turbine section. Air enters through the fan section and is compressed in the compressor section before being introduced into the combustion section. In the combustion section, the air is mixed with fuel and ignited to generate a high-energy, high temperature gas flow. The high-energy, high temperature gas flow is expanded in the turbine section which is used to create thrust and to drive the compressor and fan sections.

Certain components of gas turbine engines are thus exposed to the high-energy, high temperature gas flow (i.e., gaspath components). Therefore, ceramic matrix composites (CMCs) may be desirable for use in gas turbine engines due to their unique material properties including high temperature and oxidation resistance capabilities, high strength and creep resistance, high thermal conductivity, and low weight.

CMC components may be fabricated by laying up one or more ceramic fibers and/or ceramic fabrics in a preform. Certain gas turbine engine components, such as airfoils with platforms, can include complex curvatures and/or other features for which conventional layup techniques may result in distortions and reduced fiber regions in the preform. Techniques such as use of more than one ply of ceramic fabric joined together to create a layer of a preform may reduce defects, but joining of plies may also result in structure with increased probability of unwrapping of one or more layers, opening/splitting of one or more joint, and/or similar failures. A probability of unwrapping of one or more layers, opening/splitting of one or more joint, and/or similar failures may increase as the number and/or size of joint(s) increases.

There exists a continuing need for materials, methods, and techniques for producing airfoils with platforms, wherein the structure may comprise relatively reduced numbers of splits and/or joints.

The above information disclosed in this Background section is only for understanding of the background of the inventive concepts and, therefore, it may contain information that does not constitute prior art.

### SUMMARY OF THE INVENTION

The present disclosure is directed, in a first embodiment, to a ceramic matrix composite (CMC) component or a preform for making a CMC component, comprising: a first platform having a first gaspath-proximal surface and a first gaspath-distal surface; at least one first airfoil extending from the first platform gaspath-proximal surface, the first airfoil having a first gaspath-proximal surface and a first gaspath-distal core; the first platform and the first airfoil forming at least a first fillet at at least one interface between the first platform and the first airfoil; and the first platform comprising one or more ply, wherein at least one of the one or more ply is at least one first wrapped ply, wherein at least one of the at least one first wrapped ply comprises at least one first platform portion forming at least a portion of the first platform and at least one first fillet/airfoil portion forming at least a portion of the first fillet; the at least one first airfoil comprising one or more ply, wherein at least one of the one or more ply is at least one first tucked ply, wherein at least one of the at least one first tucked ply comprises at least one first airfoil portion forming at least a portion of the airfoil and at least one first fillet/platform portion forming at least a portion of the first fillet; wherein at least a portion of the fillet/platform portion of the first wrapped ply overlaps at least a portion of the fillet/airfoil portion of the of the first tucked ply on the gaspath-proximal side of the first tucked ply, such that at least a portion of the first wrapped ply is gaspath proximal to at least a portion of the first tucked ply, forming at least one first overlap section, wherein at least one portion of the at least one first overlap section (i) forms at least one portion of the first fillet, (ii) at least one portion of at least one first overlap section has a length that is at least 5 times to at least 15 times the thickness of at least one ceramic fabric forming the first overlap section,; and/or any combination of (i) and (ii).

In further embodiments of the present disclosure, including further embodiments of the above exemplary embodiments, at least one tucked ply further comprises at least one tab portion extending onto the platform farther than the first overlap section extends.

In further embodiments of the present disclosure, including further embodiments of the above exemplary embodiments, the component or preform further comprises a second platform having a second gaspath-proximal surface and a second gaspath-distal surface; wherein at least the first airfoil extends from the first platform gaspath-proximal surface to the second platform gaspath-proximal surface; the second platform and the first airfoil forming at least a second fillet at at least one interface between the second platform and the first airfoil; and the second platform comprising one or more ply, wherein at least one of the one or more ply is at least one second wrapped ply, wherein at least one of the at least one second wrapped ply comprises at least one second platform portion forming at least a portion of the second platform and at least one second fillet/airfoil portion forming at least a portion of the second fillet; the first tucked ply further comprising at least one second fillet/platform portion forming at least a portion of the second fillet; wherein at least a wrapped portion of the second fillet/airfoil portion of the second wrapped ply overlaps at least a portion of the fillet/platform portion of the second tucked ply on the gaspath-proximal side of the second tucked ply, such that at least a portion of the second wrapped ply is gaspath proximal to at least a portion of the second tucked ply, forming at least one second overlap section, wherein at least one portion of the at least one second overlap section (i) forms at least one portion of a fillet portion, (ii) at least one portion of at least one second overlap section has a length that is at least 5 times to at least 15 times the thickness of at least one ceramic fabric forming the second overlap section,; and/or any combination of (i) and (ii).

In further embodiments of the present disclosure, including further embodiments of the above exemplary embodiments, at least one tucked ply further comprises at least one tab portion extending onto the platform farther than the second overlap section extends.

In another embodiment, the present disclosure is directed to a ceramic matrix composite (CMC) component or a preform for making a CMC component, comprising: a first platform having a first gaspath-proximal surface and a first gaspath-distal surface; at least one first airfoil extending from the first platform gaspath-proximal surface, the first airfoil having a first gaspath-proximal surface and a first gaspath-distal core; the first platform and the first airfoil forming at least a first fillet at at least one interface between the first platform and the first airfoil; and the first platform comprising one or more ply, wherein at least one of the one or more ply is at least one first tucked ply, wherein at least one of the at least one first tucked ply comprises at least one first platform portion forming at least a portion of the first platform and at least one first fillet/airfoil portion forming at least a portion of the first fillet; the at least one first airfoil comprising one or more ply, wherein at least one of the one or more ply is at least one first wrapped ply, wherein at least one of the at least one first wrapped ply comprises at least one first airfoil portion forming at least a portion of the airfoil and at least one first fillet/platform portion forming at least a portion of the first fillet; wherein at least a portion of the first fillet/platform portion of the first wrapped ply overlaps at least a portion of the first fillet/airfoil portion of the of the first tucked ply on the gaspath-proximal side of the first tucked ply, such that at least a portion of the first wrapped ply is gaspath proximal to at least a portion of the first tucked ply, forming at least one first overlap section, wherein at least one portion of the at least one first overlap section (i) forms at least one portion of the first fillet, (ii) at least one portion of at least one first overlap section has a length that is at least 5 times to at least 15 times the thickness of at least one ceramic fabric forming the first overlap section; and/or any combination of (i) and (ii).

In further embodiments of the present disclosure, including further embodiments of the above exemplary embodiments, at least one wrapped ply further comprises at least one tab portion extending onto the platform farther than the first overlap section extends.

In further embodiments of the present disclosure, including further embodiments of the above exemplary embodiments, the component or preform of further comprises a second platform having a second gaspath-proximal surface and a second gaspath-distal surface; wherein at least the first airfoil extends from the first platform gaspath-proximal surface to the second platform gaspath-proximal surface; the second platform and the first airfoil forming at least a second fillet at at least one interface between the second platform and the first airfoil; and the second platform comprising one or more ply, wherein at least one of the one or more ply is at least one second tucked ply, wherein at least one of the at least one second tucked ply comprises at least one second platform portion forming at least a portion of the second platform and at least one second fillet/airfoil portion forming at least a portion of the second fillet; the first wrapped ply further comprising at least one second fillet/platform portion forming at least a portion of the second fillet; wherein at least a portion of the second fillet/platform portion of the first wrapped ply overlaps at least a portion of the second fillet/airfoil portion of the of the second tucked ply on the gaspath-proximal side of the second tucked ply, such that at least a portion of the first wrapped ply is gaspath proximal to at least a portion of the second tucked ply, forming at least one second overlap section, wherein at least one portion of the at least one second overlap section (i) forms at least one portion of the second fillet, (ii) at least one portion of at least one second overlap section has a length that is at least 5 times to at least 15 times the thickness of at least one ceramic fabric forming the second overlap section; and/or any combination of (i) and (ii).

In further embodiments of the present disclosure, including further embodiments of the above exemplary embodiments, at least one wrapped ply further comprises at least one tab portion extending onto the platform farther than the second overlap section extends.

In yet another embodiment, the present disclosure is directed to a method of forming a ceramic matrix composite (CMC) component, the method comprising: (a) forming a first airfoil by applying one or more ceramic fabric plies to a mandrel, the first airfoil (i) having a first gaspath proximal surface and a first gaspath distal core; and (b) forming a first platform at a first end of the first airfoil by applying one or more ceramic fabric plies; the first platform having (i) a first gaspath proximal surface with the first airfoil extending therefrom and (ii) a first gaspath distal surface opposite the first gaspath proximal surface; the first platform first gaspath proximal surface and the first airfoil first gaspath proximal surface forming a first fillet at an interface formed therebetween.

In further embodiments of the present disclosure, including further embodiments of the above exemplary embodiments, the method further comprising (c) applying at least one first airfoil tucking ply to the first airfoil, the first airfoil tucking ply comprising (A) at least one airfoil portion forming at least a portion of the first airfoil, (B) at least one first tucking portion that extends at least onto the first fillet; and (d) applying at least one first platform wrapping ply to the first platform, the first platform wrapping ply comprising (A) at least one platform portion forming at least a portion of the first platform and (B) at least one first wrapping portion that extends at least onto the first fillet and extends gaspath proximal over at least a portion of the first tucking portion, forming at least one first overlap section, wherein at least one portion of the at least one first overlap section (i) forms at least one portion of the first fillet, (ii) at least one portion of at least one first overlap section has a length that is at least 5 times to at least 15 times the thickness of at least one ceramic fabric forming the first overlap section; and/or any combination of (i) and (ii).

In further embodiments of the present disclosure, including further embodiments of the above exemplary embodiments, the method further comprises (e)(A) applying at least one nontucking and nonwrapping ply to the first airfoil; (B) applying at least one nontucking and nonwrapping ply to the first platform and/or to the second platform; and/or (C) any combination of (A) and/or (B). In still further embodiments of the present disclosure, including further embodiments of the above exemplary embodiments, the method further comprises repeating any combination of (c), (d), and/or (e) independently one or a plurality of times.

In further embodiments of the present disclosure, including further embodiments of the above exemplary embodiments, the method further comprises (c) applying at least one first platform tucking ply to the first platform, the first platform tucking ply comprising (A) at least one platform portion forming at least a portion of the first platform and (B) at least one first tucking portion that extends at least onto the first fillet; and (d) applying at least one first airfoil wrapping ply to the first airfoil, the first airfoil wrapping ply comprising (A) at least one airfoil portion forming at least a portion of the first airfoil, (B) at least one first wrapping portion that extends at least onto the first fillet and extends gaspath proximal over at least a portion of the first tucking portion, forming at least one first overlap section, wherein at least one portion of the at least one first overlap section (i) forms at least one portion of the first fillet, (ii) at least one portion of at least one first overlap section has a length that is at least 5 times to at least 15 times the thickness of at least one ceramic fabric forming the first overlap section; and/or any combination of (i) and (ii).

In further embodiments of the present disclosure, including further embodiments of the above exemplary embodiments, the method further comprises (e)(A) applying at least one nontucking and nonwrapping ply to the first airfoil; (B) applying at least one nontucking and nonwrapping ply to the first platform and/or to the second platform; and/or (C) any combination of (A) and/or (B). In still further embodiments of the present disclosure, including further embodiments of the above exemplary embodiments, the method further comprises repeating any combination of (c), (d), and/or (e) independently one or a plurality of times.

In further embodiments of the present disclosure, including further embodiments of the above exemplary embodiments, the method further comprises (c) forming a second platform at a second end of the first airfoil by applying one or more ceramic fabric plies; the second platform having (i) a second gaspath proximal surface with the first airfoil extending therefrom and (ii) a second gaspath distal surface opposite the second gaspath proximal surface; the second platform second gaspath proximal surface and the first airfoil first gaspath proximal surface forming a second fillet at their interface; the first airfoil extending between the first gaspath proximal surface of the first platform and the second gaspath proximal surface of the second platform.

In further embodiments of the present disclosure, including further embodiments of the above exemplary embodiments, the method further comprises (d) applying at least one first airfoil tucking ply to the first airfoil, the first airfoil tucking ply comprising (A) at least one airfoil portion forming at least a portion of the first airfoil, (B) at least one first tucking portion that extends at least onto the first fillet; and (e) applying at least one first platform wrapping ply to the first platform, the first platform wrapping ply comprising (A) at least one platform portion forming at least a portion of the first platform and (B) at least one first wrapping portion that extends at least onto the first fillet and extends gaspath proximal over at least a portion of the first tucking portion, forming at least one first overlap section, wherein at least one portion of the at least one first overlap section (i) forms at least one portion of the first fillet, (ii) at least one portion of at least one first overlap section has a length that is at least 5 times to at least 15 times the thickness of at least one ceramic fabric forming the first overlap section; and/or any combination of (i) and (ii).

In further embodiments of the present disclosure, including further embodiments of the above exemplary embodiments, the method further comprises (f)(A) applying at least one nontucking and nonwrapping ply to the first airfoil; (B) applying at least one nontucking and nonwrapping ply to the first platform and/or to the second platform; and/or (C) any combination of (A) and/or (B). In still further embodiments of the present disclosure, including further embodiments of the above exemplary embodiments, the method further comprises repeating any combination of (c), (d), (e), and/or (f) independently one or a plurality of times.

In further embodiments of the present disclosure, including further embodiments of the above exemplary embodiments, the first airfoil tucking ply further comprises (C) at least second tucking portion that extends at least onto the second fillet; and the method further comprises: (f) applying at least one second platform wrapping ply to the second platform, the second platform wrapping ply comprising (A) at least one platform portion forming at least a portion of the second platform and (B) at least one second wrapping portion that extends at least onto the second fillet and extends gaspath proximal over at least a portion of the second tucking portion, forming at least one second overlap section, wherein at least one portion of the at least one second overlap section (i) forms at least one portion of the second fillet, (ii) at least one portion of at least one second overlap section has a length that is at least 5 times to at least 15 times the thickness of at least one ceramic fabric forming the second overlap section; and/or any combination of (i) and (ii).

In further embodiments of the present disclosure, including further embodiments of the above exemplary embodiments, the method further comprises (g)(A) applying at least one nontucking and nonwrapping ply to the first airfoil; (B) applying at least one nontucking and nonwrapping ply to the first platform and/or to the second platform; and/or (C) any combination of (A) and/or (B). In still further embodiments of the present disclosure, including further embodiments of the above exemplary embodiments, the method further comprises repeating any combination of (d), (e), (f), and/or (g) independently one or a plurality of times.

In further embodiments of the present disclosure, including further embodiments of the above exemplary embodiments, the method further comprises (d) applying at least one first platform tucking ply to the first platform, the first platform tucking ply comprising (A) at least one platform portion forming at least a portion of the first platform and (B) at least one first tucking portion that extends at least onto the first fillet; (e) applying at least one second platform tucking ply to the second platform, the second platform tucking ply comprising (A) at least one platform portion forming at least a portion of the second platform and (B) at least one second tucking portion that extends at least onto the second fillet; and (f) applying at least one first airfoil wrapping ply to the first airfoil, the first airfoil wrapping ply comprising (A) at least one airfoil portion forming at least a portion of the first airfoil, (B) at least one first wrapping portion that extends at least onto the first fillet and extends gaspath proximal over at least a portion of the first tucking portion, forming at least one first overlap section, and (C) at least second wrapping portion that extends at least onto the second fillet and extends gaspath proximal over at least a portion of the second tucking portion, forming at least one second overlap section; wherein (a) at least one portion of the at least one first overlap section (i) forms at least one portion of the first fillet, (ii) at least one portion of at least one first overlap section has a length that is at least 5 times to at least 15 times the thickness of at least one ceramic fabric forming the first overlap section, and/or (iii) any combination of (i) and/or (ii); (b) at least one portion of the at least one second overlap section (i) forms at least one portion of the second fillet, (ii) at least one portion of at least one second overlap section has a length that is at least 5 times to at least 15 times the thickness of at least one ceramic fabric forming the second overlap section, and/or (iii) any combination of (i) and/or (ii); and/or any combination of (b) and/or (c).

In further embodiments of the present disclosure, including further embodiments of the above exemplary embodiments, the method further comprises (g)(A) applying at least one nontucking and nonwrapping ply to the first airfoil; (B) applying at least one nontucking and nonwrapping ply to the first platform and/or to the second platform; and/or (C) any combination of (A) and/or (B). In still further embodiments of the present disclosure, including further embodiments of the above exemplary embodiments, the method further comprises repeating any combination of (c), (d), (e), (f), and/or (g) independently one or a plurality of times.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1 schematically illustrates a partial cross section of an exemplary gas turbine engine.
FIG. 2A is a first perspective view of an exemplary vane, which may be provided in, e.g., a gas turbine engine. FIG. 2B is a second perspective view of an exemplary vane, which may be provided in, e.g., a gas turbine engine.
FIG. 3 is a perspective view of an exemplary vane comprising wrapped platform ply(s) and/or tucked airfoil ply(s).
FIG. 4 is a cross sectional view of view FIG. 3.
FIG. 5 is a perspective view of an exemplary vane comprising wrapped platform ply(s) and/or tucked airfoil ply(s) and further comprising splits.
FIG. 6 is a perspective view of an exemplary vane comprising wrapped platform ply(s) and/or tucked airfoil ply(s), wherein exemplary tucked airfoil ply(s) comprises exemplary tabs.
FIG. 7 is a cross sectional view of view FIG. 6.
FIG. 8 is a perspective view of a non-limiting exemplary vane comprising tucked platform ply(s) and/or wrapped airfoil ply(s).
FIG. 9A is a cross sectional view of view FIG. 8. FIG. 9B is a cross sectional view of FIG. 8 with certain portions omitted.
FIG. 10 is a flowchart illustrating an exemplary method of fabricating an exemplary vane.

### DETAILED DESCRIPTION OF THE INVENTION

The subject matter disclosed herein relates to a ceramic matrix composite (CMC) airfoil extending at least from one platform and methods of fabrication thereof, and more particularly to a CMC airfoil wherein (a)(i) one or more airfoil portion ply may be extended onto one or more fillet portion and optionally onto one or more platform portion and may be tucked under one or more platform ply; (ii) one or more platform portion ply may be extended onto one or more fillet portion and optionally onto one or more airfoil portion and may be wrapped around one or more airfoil ply; and/or (iii) any combination of (i) and/or (ii) ; (b)(i) one or more airfoil portion ply may be extended onto one or more fillet portion and optionally onto one or more platform portion and may be wrapped over one or more platform ply; (ii) one or more platform portion ply may be extended onto one or more fillet portion and optionally onto one or more airfoil portion and may be tucked under one or more airfoil ply; and/or (iii) any combination of (i) and/or (ii); and/or (c) any combination of (a) and/or (b).

The embodiments of the present disclosure can comprise, consist of, and consist essentially of the features and/or steps described herein, as well as any of the additional or optional ingredients, components, steps, or limitations described herein or that would otherwise be appreciated by one of skill in the art.

The following discussion omits or only briefly describes conventional features of the disclosed technology that are apparent to those skilled in the art. Reference to a particular embodiment does not limit the scope of the claims attached hereto. Additionally, any examples set forth in this specification are intended to be non-limiting and merely set forth some of the many possible embodiments for the appended claims. Further, particular features described herein can be used in combination with other described features in each of the various possible combinations and permutations. A person of ordinary skill in the art would know how to use the instant invention, in combination with routine experiments, to achieve other outcomes not specifically disclosed in the examples or the embodiments.

Unless otherwise specifically defined herein, all terms are to be given their broadest possible interpretation including meanings implied from the specification as well as meanings understood by those skilled in the art and/or as defined in dictionaries, treatises, etc. Unless defined otherwise, all technical and scientific terms used herein have the same meaning as commonly understood by one of ordinary skill in the art in the field of the disclosed technology. It must also be noted that, as used in the specification and the appended claims, the singular forms "a," "an," and "the" include plural referents unless otherwise specified, and that the terms "includes" and/or "including," when used in this specification, specify the presence of stated features, elements, and/or components, but do not preclude the presence or addition of one or more other features, steps, operations, elements, components, and/or groups thereof. Additionally, methods, equipment, and materials similar or equivalent to those described herein can also be used in the practice or testing of the disclosed technology.

The devices of the present disclosure may be understood more readily by reference to the following detailed description of the embodiments taken in connection with the accompanying drawing figures, which form a part of this disclosure. It is to be understood that this application is not limited to the specific devices, methods, conditions or parameters described and/or shown herein, and that the terminology used herein is for the purpose of describing particular embodiments by way of example only and is not intended to be limiting. All spatial references, such as, for example, proximal, distal, horizontal, vertical, top, upper, lower, bottom, left and right, are for illustrative purposes only and can be varied within the scope of the disclosure. For example, the references "upper" and "lower" are relative and used only in the context to the other, and are not necessarily "superior" and "inferior."

It will further be understood that, although the terms "first," "second," "third," and the like may be used herein to describe various elements, these elements should not be limited by these terms. These terms are only used to distinguish one element from another element. Thus, "a first element" discussed below could be termed "a second element" or "a third element," and "a second element" and "a third element" may be termed likewise without departing from the teachings herein.

Various examples of the disclosed technology are provided throughout this disclosure. The use of these examples is illustrative only, and in no way limits the scope and meaning of the invention or of any exemplified form. Likewise, the invention is not limited to any particular preferred embodiment(s) described herein. Indeed, modifications and variations of the invention may be apparent to those skilled in the art upon reading this specification, and can be made without departing from its spirit and scope. The invention is therefore to be limited only by the terms of the claims, along with the full scope of equivalents to which the claims are entitled.

In the discussion below, "axial" refers to a direction that coincides with the longitudinal axis of the engine. "Radial" refers to a direction that is radial with respect to the longitudinal axis of the engine. "Circumferential" refers to a direction that corresponds to the circumference of a circle around the longitudinal axis of the engine. The "leading" edge/portion of a structure is the edge/portion that faces into the flow of the hot gases, i.e., faces "upstream". The "trailing" edge/portion of a structure is the edge/portion that the faces away from the flow of the hot gases, i.e., faces "downstream".

The present disclosure is directed to ceramic matrix composite (CMC) component(s), to ceramic fabric layup(s) (i.e., preform(s)) of the CMC components(s), and to method(s) for fabricating CMC components(s). In particular, the component(s) of the disclosure may be one or more airfoil(s) associated with one or more platform(s), which may be utilized in, e.g., turbomachinery, such as gas turbine engines. In some embodiments, the one or more airfoil(s) associated with one or more platform(s) may be one or more vane(s), which may be utilized in, e.g., turbomachinery, such as gas turbine engines. As used herein, one or more airfoil(s) associated with one or more platform(s) may be preferred to as an "airfoil-platform" component.

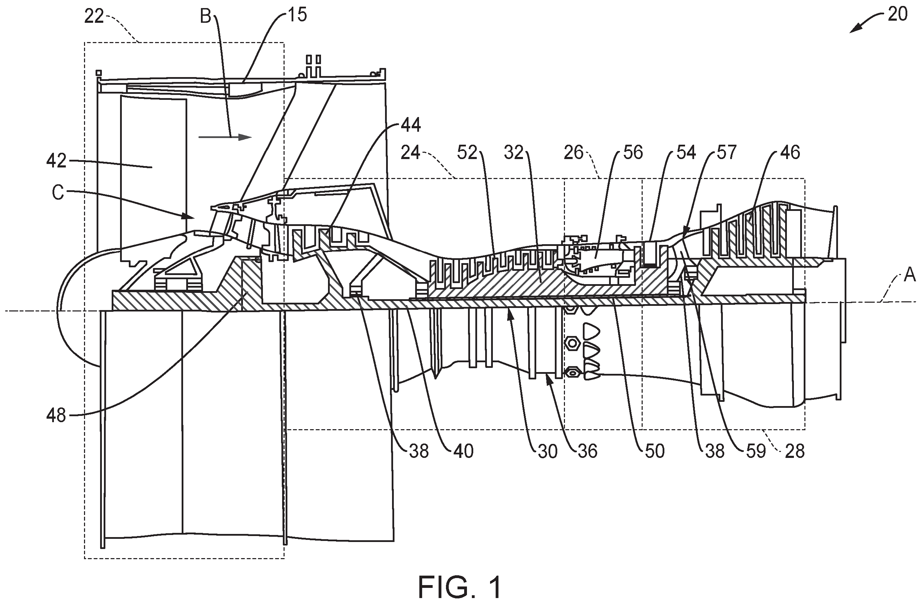

FIG. 1 schematically illustrates an example of a gas turbine engine 20 (in this example, an exemplary two-spool turbofan is illustrated) which includes a fan section 22, a compressor section 24, a combustor section 26, and a turbine section 28. Fan section 22 drives air along a bypass flow path B in a bypass duct defined within a housing 15, and also along a core flow path C for compression in compressor section 24, with subsequent introduction into combustor section 26, followed by expansion through turbine section 28. Although FIG. 1 depicts a two-spool turbofan gas turbine engine, it should be understood that the concepts described herein are not limited to use with two-spool turbofans engines and may be applied to other types of turbine engines.

Engine 20 generally includes a low speed spool 30 and a high-speed spool 32 mounted for rotation about an engine central longitudinal axis A, relative to an engine static structure 36, via several bearing systems 38. Various bearing systems 38 at various locations may alternatively or additionally be provided. The location of bearing systems 38 may be varied as appropriate to the application.

The low speed spool 30 generally includes an inner shaft 40 that interconnects, a first (or low) pressure compressor 44 and a first (or low) pressure turbine 46. Inner shaft 40 is connected to fan 42 through a speed change mechanism, which in this exemplary embodiment is illustrated as a geared structure 48 to drive fan 42 at a lower speed than the low speed spool 30. High speed spool 32 includes an outer shaft 50 that interconnects a second (or high) pressure compressor 52 and a second (or high) pressure turbine 54. Combustor 56 is positioned between high pressure compressor 52 and high-pressure turbine 54. A mid-turbine frame 57 of the engine static structure 36 may be arranged generally between the high-pressure turbine 54 and the low-pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core air flow is first compressed by low pressure compressor 44, and then by the high-pressure compressor 52. Thereafter, the core air flow is mixed and burned with fuel in combustor 56, then expanded in high pressure turbine 54 and low-pressure turbine 46. The mid-turbine frame 57 includes airfoils 59 which are in the core airflow path C. The turbines 46 and 54 rotationally drive the respective low speed spool 30 and high-speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low-pressure compressor, or aft of the combustor section 26 or even aft of turbine section 28, and fan 42 may be positioned forward or aft of the location of gear system 48.

The turbine section 28 includes at least one rotor and at least one blade extending radially outwardly from the rotor. The turbine section 28 may further include a blade outer air seal(s) (BOAS(s)). The blade outer air seal can be an assembly of a plurality of BOAS segments that together form an annular shaped shroud around the engine's central longitudinal axis A which is positioned between an outer casing of the engine and the turbine blade(s) of the turbine section.

A gas turbine engine, or other turbomachinery, can be provided with one or more airfoil(s). One or more airfoil(s) may be associated with one or more platform(s), which platform(s) may provide one or more functions, such as supporting one or more airfoil(s), providing attachment for one or more airfoil(s) to one or more other structure(s), and/or transferring one or more load from airfoil(s) to one or more other structure(s). As used herein, one or more airfoil(s) associated with one or more platform(s) may be preferred to as an "airfoil-platform" component. Airfoil(s) associated with one or more platform(s) may comprise one or more CMC and may be fabricated using a layup technique during which one or more plies (sheets) of one or more ceramic fabric (which may be referred to as a "ceramic fabric ply" or a "ply") may be formed into a preform comprising one or more airfoil(s) and one or more platform(s). In embodiments, such preforms may be fabricated using more than one layer of ceramic fabric (which may be referred to as a "ceramic fabric layer" or a "layer"). One or more layer may comprise one or more plies; in other words, more than one ply of ceramic fabric may be utilized to construct any given layer. In some embodiments, one or more layers may form a complete preform, while one or more other layers may form only one or more portion of a preform. It will be appreciated that different portions of a preform may comprise differing numbers of plies and/or layers. In the present disclosure, a ply a majority of which forms one or more portion of an airfoil may be referred to as an "airfoil ply"; and a ply a majority of which forms one or more portion of a platform may be referred to as a "platform ply". One or more plies and/or layers may independently vary in thickness.

Additional ceramic materials, such as one or more insert comprising one or more axially aligned ceramic fibers that are not formed into fabric (e.g., one or more "noodle") can be incorporated, as necessary or desirable, into a preform.

In an exemplary embodiment, ceramic fabrics can include, as non-limiting examples, fibers of carbon, silicon carbide, alumina, mullite, other suitable ceramic material, or any combination thereof. In exemplary embodiments, the ceramic fibers and/or fabrics can be reinforced (i.e., densified or infiltrated) with a ceramic matrix material, such as, but not limited to, carbon, silicon carbide, alumina, mullite, or other suitable ceramic material, or any combination thereof. Likewise, in exemplary embodiments, optional noodle(s) can comprise, as non-limiting examples, fibers of carbon, silicon carbide, alumina, mullite, or other suitable ceramic material, or any combination thereof. Fabrics, fibers, noodles, and matrixes may each, independently of one another, be comprised of the same or of different materials.

Airfoil(s) associated with one or more platforms can include one or more curvatures, contours, bends, angles, and/or other geometrical features, which may be complex and may form angles of about 90 degrees, such as approximately 80 degrees to approximately 170 degrees, approximately 90 degrees to approximately 160 degrees, approximately 100 degrees to approximately 150 degrees, or approximately 110 degrees to approximately 140 degrees. Further, airfoil(s) associated with one or more platforms may also be associated with additional structures, such as, for example, one or more flanges, which may be located on and/or extend from a platform, for example. Such additional structures may form angles of about 90 degrees, such as approximately 80 degrees to approximately 170 degrees, approximately 90 degrees to approximately 160 degrees, approximately 100 degrees to approximately 150 degrees, or approximately 110 degrees to approximately 140 degrees. Such additional structures may be fabricated with one or more airfoils associated with one or more platforms; for example, a preform comprising airfoil(s), platform(s), and one or more additional structure(s) may be fabricated.

While airfoil(s) associated with one or more platforms, flanges, or other structures can include one or more curvatures, contours, bends, angles, and/or other geometrical features, which may be complex, ceramic fabric(s) may have minimum bend radii. A minimum bend radius may be the radius at which a ceramic fabric ply (sheet) and/or ceramic fiber breaks, frays, cracks, and/or otherwise fails. Minimum bend radius may vary between ceramic fabric(s), and may be affected by multiple factors, such as, for example, the composition of the ceramic fibers, fabric architecture (e.g., woven, braided, unidirectional, etc.), fabric layup orientation, other factors, and/or any combination of factors. As non-limiting examples, for SiC-SiC CMCs, a minimum bend radius could be below 0.02" for woven fabric, and below 0.015" for braided fabric. One of ordinary skill in the art can, using routine methods, determine minimum bend radi(us) for given ceramic fabric(s).

Due, among other considerations, to the minimum bend radii of ceramic fabric(s), in fabricating airfoil(s) associated with one or more platforms, flanges, or other structures, it may be desirable (i) to form one or more layer(s) from more than one ceramic fabric ply per layer and/or (ii) to split and rejoin a ceramic fabric ply and/or layer, either or both of which ((i) and/or (ii)) may necessitate joints between plies and/or between sections of a layer. Each joint may independently be, for example, a butt joint or an overlapping joint, an may further include stitches, which may stabilize structures during layup.

While it may be desirable to form one or more curvatures, contours, bends, angles, and/or other geometrical features by employing such techniques as (i) forming one or more layer(s) from more than one ceramic fabric ply per layer and/or (ii) splitting and rejoining a ceramic fabric ply and/or layer, splitting and/or joining of plies may also result in one or more structures with increased probability of unwrapping of one or more layers, opening/splitting of one or more joint, and/or similar failures. A probability of unwrapping of one or more layers, opening/splitting of one or more joint, and/or similar failures may increase as the number and/or size of joint increases.

In embodiments, a platform may lie substantially in given plane, and one or more an airfoil may extend from at least one platform at a substantial angle, such that the at least one platform and the airfoil may lie in different planes; accordingly, an angular juncture may be formed between an airfoil and a platform. In embodiments such a juncture may be formed by one or more curved section, which may be referred to as a fillet(s). Fillets formed from a plurality of plies and/or from a ply that is split and rejoined may be liable to unwrapping of plies/layers, such as when a platform-airfoil component is structurally challenged, such as during operation of a gas turbine engine. Accordingly, it has been found to be desirable to minimize splits and/or joints of fillets of air-foil-platform components. Such minimization may be particularly desirable on or towards the gaspath-proximal side of component(s).

In has been found that wrapping and/or tucking of one or more plies may reduce and/or eliminate probability of unwrapping of one or more plies/layers, opening/splitting of one or more joint, and/or similar failures, in airfoil-platform components, as compared to one or more airfoil-platform components that lack such wrapping and/or tucking of one or more plies.

In some embodiments, (a) at least one portion of at least one platform ply (i) may extend over at least one portion of a gaspath-proximal side of at least one airfoil ply and/or (ii) may be wrapped around at least one portion of a gaspath-proximal side of at least one airfoil ply, forming at least one overlap section; (b) at least one portion of at least one airfoil ply (i) may extend under at least one portion of a gaspath-distal side of at least one platform ply and/or (ii) may be tucked under at least one portion of a gaspath-distal side of at least one platform ply, forming at least one overlap section; and/or (c) any combination of (a) and/or (b). In accordance with the present disclosure, a platform ply at least a portion of which is wrapped around at least one portion of a gaspath-proximal side of at least one airfoil ply may be referred to as a "platform wrapped" ply, a "wrapped platform" ply, a "platform wrapping" ply, a "wrapping platform" ply, or the like. In accordance with the present disclosure, an airfoil ply at least a portion of which is tucked under at least one portion of a gaspath-distal side of at least one platform ply may be referred to as an "airfoil tucked" ply, a "tucked airfoil" ply, an "airfoil tucking" ply, a "tucking airfoil" ply, or the like.

In some embodiments, (a) at least one portion of at least one airfoil ply (i) may extend over at least one portion of a gaspath-proximal side of at least one platform ply and/or (ii) may be wrapped around at least one portion of a gaspath-proximal side of at least one platform ply, forming at least one overlap section; (b) at least one portion of at least one platform ply (i) may extend under at least one portion of a gaspath-distal side of at least one airfoil ply and/or (ii) may be tucked under at least one portion of a gaspath-distal side of at least one airfoil ply, forming at least one overlap section; and/or (c) any combination of (a) and/or (b). In accordance with the present disclosure, an airfoil ply at least a portion of which is wrapped around at least one portion of a gaspath-proximal side of at least one platform ply may be referred to as an "airfoil wrapped" ply, a "wrapped airfoil" ply, an "airfoil wrapping" ply, a "wrapping airfoil" ply, or the like. In accordance with the present disclosure, a platform ply at least a portion of which is tucked under at least one portion of a gaspath-distal side of at least one airfoil ply may be referred to as a "platform tucked" ply, "tucked platform" ply, a "platform tucking" ply, a "tucking platform" ply, or the like.

In some embodiments, (a) at least one portion of at least one overlap section forms at least one portion of one or more fillet, (b) at least one portion of at least one overlap section has a length that is at least about 4 times to at least about 30 times, at least about 6 times to at least about 28 times, at least about 8 times to at least about 26 times, at least about 10 times to at least about 24 times, at least about 12 times to at least about 22 times, at least about 14 times to at least about 20 times, at least about 16 times to at least about 18 times, at least about 5 times to at least about 15 times, at least about 5 times, at least about 10 times, at least about 15 times, at least about 20 times, at least about 25 times, or at least about 30 times the thickness of at least one ceramic fabric forming the overlap section, wherein (i) the length of overlap for an airfoil ply may be the length of the airfoil ply that extends from the airfoil onto a fillet and towards a platform and/or (ii) the length of overlap for a platform ply may be the length of the platform ply that extends from the platform onto a fillet and towards an airfoil; and/or (c) any combination of (a) and/or (b). The length of the overlap section may be uniform or may vary.

In some embodiments, a wrapped ply may form one or more of relatively more gaspath-proximal ceramic fabric layers of a first platform, a second platform, and/or each of a first platform and a second platform. In some embodiments, a wrapped ply may form a most gaspath-proximal ceramic fabric layer of a first platform, a second platform, and/or each of a first platform and a second platform.

In embodiments, an airfoil-platform component may comprise one or more airfoil(s) extending between two platforms. In embodiments, an airfoil-platform component may comprise an airfoil extending between two platforms; such an airfoil-platform component may be referred to as a "vane". A gas turbine engine can be provided with one or more vanes. A vane may also be known as a "turbine vane", a "stator vane", a "turbine stator vane", or the like. Vane(s) may be located, e.g., in a turbine section 28.

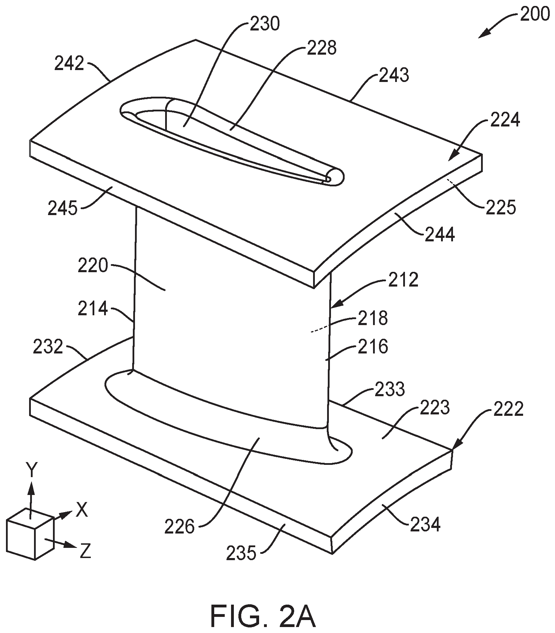

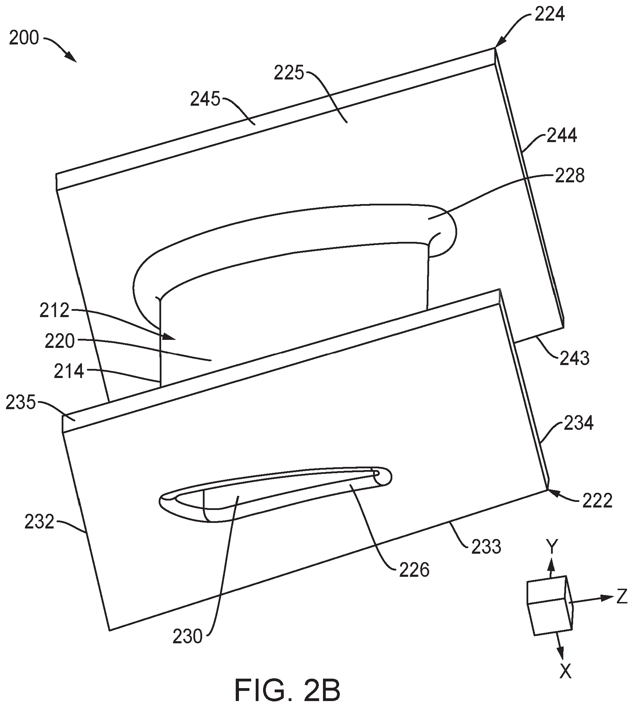

FIG. 2A is a first perspective view of an exemplary vane 200, which may be provided in, e.g., turbomachinery, such as a gas turbine engine. FIG. 2B is a second perspective view of an exemplary vane 200, which may be provided in, e.g., a gas turbine engine. FIG. 2A and FIG. 2B will be discussed together. Vane 200 includes airfoil 212 having leading edge side 214, trailing edge side 216, pressure side 218, and suction side 220. Trailing edge side 216 is oppositely disposed from leading edge side 214, and suction side 220 is oppositely disposed from pressure side 218. Airfoil 212 defines a gaspath-distal inner core/cavity 230. Vane 200 further includes inner diameter (ID) platform 222 and oppositely disposed outer diameter (OD) platform 224. ID platform 222 includes ID platform leading edge 232, ID platform pressure edge 233, ID platform trailing edge 234, ID platform suction edge 235, and ID platform gaspath-proximal side 223. OD platform 224 includes OD platform leading edge 242, OD platform pressure edge 243, OD platform trailing edge 244, OD platform suction edge 245, and OD platform gaspath-proximal side 225. In exemplary vane 200, airfoil 212 extends between ID platform gaspath-proximal side 223 and OD platform gaspath-proximal side 225. However, one or more airfoil extending from a gaspath-proximal side of a single platform is also contemplated. ID fillet 226 can provide an aerodynamic transition between airfoil 212 and ID platform 222, and OD fillet 228 can provide an aerodynamic transition between airfoil 212 and OD platform 224. In exemplary vane 200, together, airfoil 212, ID platform gaspath-proximal side 223, and OD platform gaspath-proximal side 225 define an area (i) between ID platform 222 and OD platform 224 and (ii) distal from gaspath-distal core 230, which may be subject to high-energy, high temperature gas flow during operation of turbomachinery in which vane 200 may be employed; this area may be referred to as "gaspath-proximal".

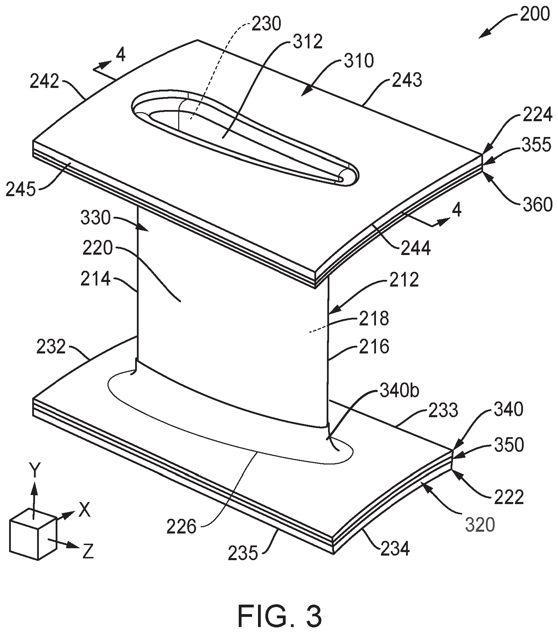

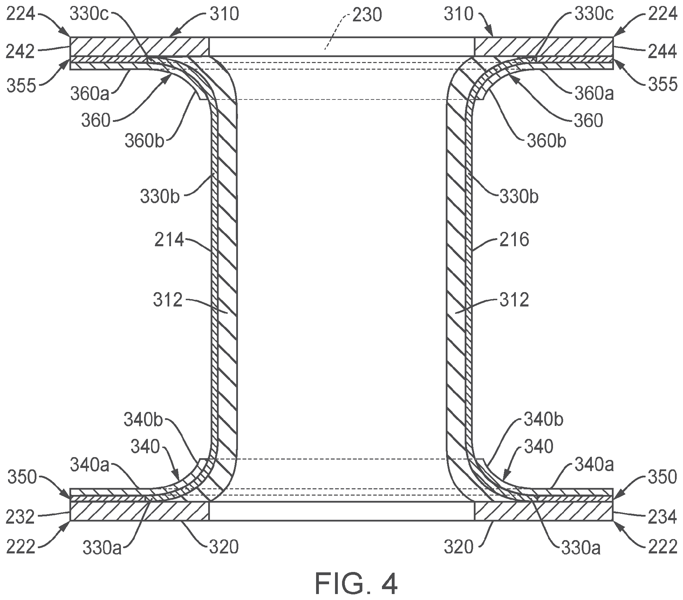

FIG. 3 is a perspective view of a non-limiting exemplary vane comprising wrapped platform ply(s) and/or tucked airfoil ply(s). FIG. 4 is a cross sectional view of view FIG. 3 at location line 4 of FIG. 3. FIG. 3 and FIG. 4 will be discussed together. FIG. 3 and FIG. 4 illustrate ID platform gaspath-distal donut ply 320, OD platform gaspath-distal donut ply 310, and airfoil gaspath-distal ply(s) 312. Although donut plies are illustrated, in embodiments, two or a plurality of plies may make up one or more platform layer(s). Further, in embodiments, airfoil gaspath-distal ply(s) 312 may be a continuous ply or may be more than one ply. Also illustrated is airfoil tucking ply(s) 330, which comprises at least one airfoil tucking ply(s) ID fillet/platform portion 330a, at least one airfoil tucking ply(s) airfoil portion 330b, and at least one airfoil tucking ply(s) OD fillet/platform portion 330c. Airfoil tucking ply(s) 330 may optionally be cut and joined, may optionally be comprised of more than one ply, or the like; optionally, airfoil tucking ply(s) 330 may be continuous in at least the portion(s) thereof that are tucked under platform wrapping ply(s). Also illustrated are ID platform wrapping ply(s) 340, which comprises at least one ID platform wrapping ply(s) platform portion 340a and at least one ID platform wrapping ply(s) fillet/airfoil portion 340b. ID platform wrapping ply(s) 340 may optionally be cut and joined, may optionally be comprised of more than one ply, or the like; optionally, ID platform wrapping ply(s) 340 may be continuous in at least the portion(s) thereof that are wrapped over airfoil tucking ply(s). Also illustrated are OD platform wrapping ply(s) 360, which comprises at least one OD platform wrapping ply(s) platform portion 360a and at least one ID platform wrapping ply(s) fillet/airfoil portion 360b. OD platform wrapping ply(s) 360 may optionally be cut and joined, may optionally be comprised of more than one ply, or the like; optionally, OD platform wrapping ply(s) 360 may be continuous in at least the portion(s) thereof that are wrapped over airfoil tucking ply(s). As can be seen, in the illustrated exemplary embodiment, most gaspath-proximal airfoil tucking ply(s) 330 is wrapped around a gaspath-proximal side of airfoil 212 and is tucked into both (i) most gaspath-proximal ID platform wrapping platform ply(s) 340 of ID platform 222 and (ii) most gaspath-proximal OD platform wrapping platform ply(s) 360 of OD platform 224. Likewise, in this example, both (i) most gaspath-proximal ID platform wrapping platform ply(s) 340 of ID platform 222 and (ii) a most gaspath-proximal OD platform wrapping platform ply(s) 360 of OD platform 224 are wrapped around most gaspath-proximal airfoil tucking ply(s) 330, which is wrapped around/forms gaspath-proximal side(s) of airfoil 212.

FIG. 3 and FIG. 4 are not intended to define exact termination points of airfoil tucking ply(s) ID platform fillet portion 330a or airfoil tucking ply(s) OD platform fillet portion 330c, but rather are intended to illustrate a wrapping and/or tucking concept. Likewise, FIG. 3 and FIG. 4 are not intended to define exact termination points of ID platform wrapping ply(s) fillet portion 340b or ID platform wrapping ply(s) fillet portion 360b, but rather are intended to illustrate a wrapping and/or tucking concept. In embodiments (i) airfoil tucking ply(s) ID fillet/platform portion 330a may terminate on ID fillet 226, may extend onto ID platform 222, and/or may vary in length; (ii) airfoil tucking ply(s) OD fillet/platform portion 330c may terminate on OD fillet 228, may extend onto OD platform 224, and/or may vary in length; (iii) ID platform wrapping ply(s) fillet/airfoil portion 340b may terminate on ID fillet 226, may extend onto airfoil 212, or may vary in length; (iv) OD platform wrapping ply(s) fillet/airfoil portion 360b may terminate on OD fillet 228, may extend onto airfoil 212, or may vary in length; and/or (v) any combination of (i), (ii), (iii), and/or (iv). As can be seen, in embodiments, airfoil tucking ply(s) ID platform fillet portion 330a and airfoil tucking ply(s) OD platform fillet portion 330c may extend only into fillet portions of vane 200 and may not extend onto platform portions. Accordingly, in embodiments, ceramic fabric may be cut to form one or more "filler" ply(s) to avoid space, unevenness, and/or distortion of platform ply(s) on either side of airfoil tucking ply(s) 330. Exemplary ID filler ply(s) 350 and OD filler ply(s) 355 are illustrated. Exemplary ID filler ply(s) 350 and OD filler ply(s) 355 are illustrated as donut plies; however, filler ply(s) 350 and/or filler ply(s) 355 independently may optionally comprise one or more splits and/or may be constructed of more than one ply each. Filler ply(s) are, however, optional, and fabric distortion may be utilized, as an exemplary alternative. As can also be seen, in embodiments, ID platform wrapping ply(s) fillet portion(s) 340a and OD platform wrapping ply(s) fillet portion(s) 360a may extend only into fillet portions of vane 200 and may not extend onto airfoil portions. An airfoil filler ply(s) is not shown in FIG. 3 and FIG. 4, but, in embodiments, one or more optional filler ply(s) may be employed.

Gaspath-proximal airfoil tucking ply(s)330 may be exemplary of "airfoil tucked" or "airfoil tucking" ply(s) and may form an "airfoil tucked layer" or an "airfoil tucking layer". Each of gaspath-proximal ID platform wrapping donut ply(s) 340 and OD platform wrapping donut ply(s) 360 may be exemplary of "platform wrapped" or "platform wrapping" ply(s) and may form a "platform wrapped layer" or "platform wrapping layer"; collectively, they may be exemplary of "platform wrapped layers" or "platform wrapping layers". For additional clarity, only exemplary layers are illustrated. Additional tucked airfoil ply(s), additional wrapped platform ply(s), additional unwrapped platform ply(s), additional untucked airfoil ply(s), and/or any combination thereof may be present. As one non-limiting example, layer(s) comprising tucked airfoil ply(s) and wrapped platform ply(s) may alternate with layers comprising untucked airfoil ply(s) and unwrapped platform ply(s). In some embodiments, exemplary tucked ply(s) 330 may be one continuous ply that forms an entire, or essentially an entire, airfoil. In some embodiments, exemplary tucked layer 330 may be formed by more than one ply, such as, for example, (i) a first airfoil ply extending from airfoil leading edge 214 over airfoil pressure side 218 to or towards airfoil trailing edge 216 and (ii) a second airfoil ply extending from airfoil leading edge 214 over airfoil suction side 220 to or towards airfoil trailing edge 216. Such a first airfoil ply and such a second airfoil ply may be joined in their airfoil portion(s), may be joined in one or more sections, but not in other section(s), or may be unjoined. In some embodiments, exemplary tucked airfoil layer 330 may be one continuous ply that forms an entire, or essentially an entire, airfoil. In some embodiments, exemplary wrapped platform ply(s) 340 and/or exemplary wrapped platform ply(s) 360 may independently be formed by one continuous donut ply or may be formed by more than one ply. Plies may be joined, may be joined in some sections(s) but not in other section(s), or may be unjoined.

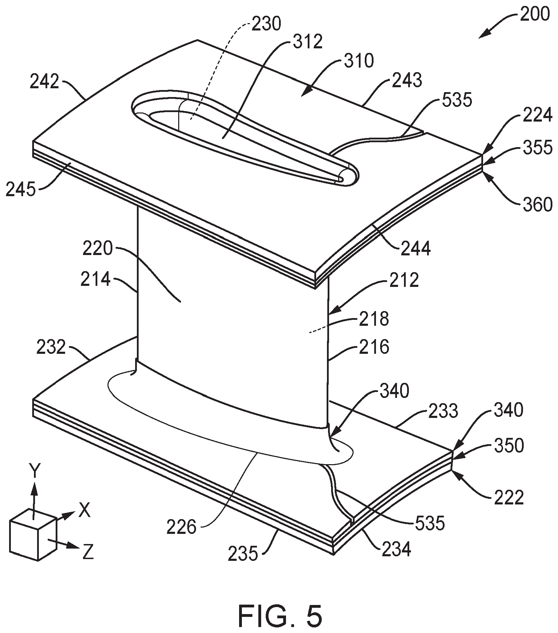

FIG. 5 is a perspective view of a non-limiting exemplary vane 200 comprising wrapped platform ply(s) and/or tucked airfoil ply(s) and further comprising splits. In some embodiments, (i) one or more wrapped ID platform layer 340 may comprise one or more platform split 535; (ii) one or more wrapped OD platform layer 360 may comprise one or more platform split 535; and/or (iii) any combination of (i) and/or (ii). In some embodiments, one or more tucked airfoil layer may comprise one or more split, which is not illustrated. For example, although tucked layer 330 is shown without splits, in embodiments, tucked layer 330 may comprise one or more splits. In some embodiments, one or more platform splits 535 may not align and/or overlap with one or more splits in one or more tucked airfoil layer; in some embodiments, no, essentially no, and/or no intentional alignment and/or overlap may exist between any platform split 535 and any split in one or more tucked airfoil layer. Such splitting is optional; while one or more platform split 535 may be used to facilitate fabrication of vane 200; one or more or all platform splits 535 may be omitted, and (i) one or more continuous unsplit ID platform layer may be slid over tucked airfoil layer 330; (ii) one or more continuous unsplit OD platform layer may slid over tucked airfoil layer 330; and/or (iii) any combination of (i) and/or (ii). In embodiments, one or more platform splits may be used to facilitate assembly and may be joined by, e.g., butt joint(s), overlap joint(s), and/or stitching. Such splitting may be or may not be used with other embodiments of the disclosure. In embodiments, such splitting and/or joining may also be used on airfoil ply(s) and/or layer(s).

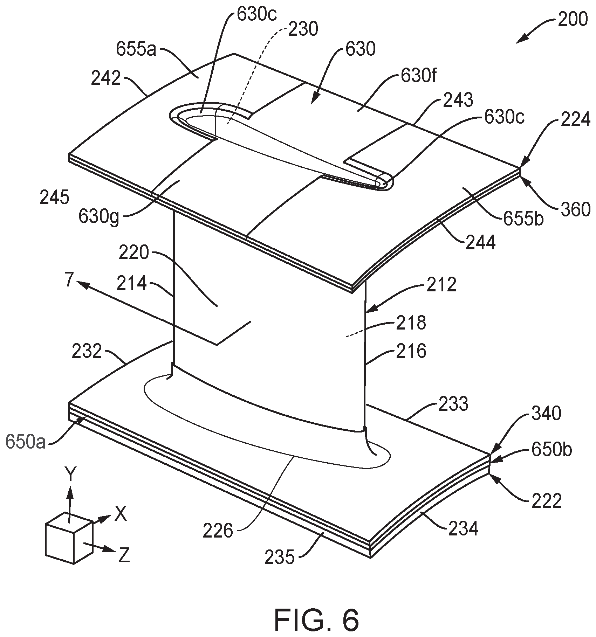

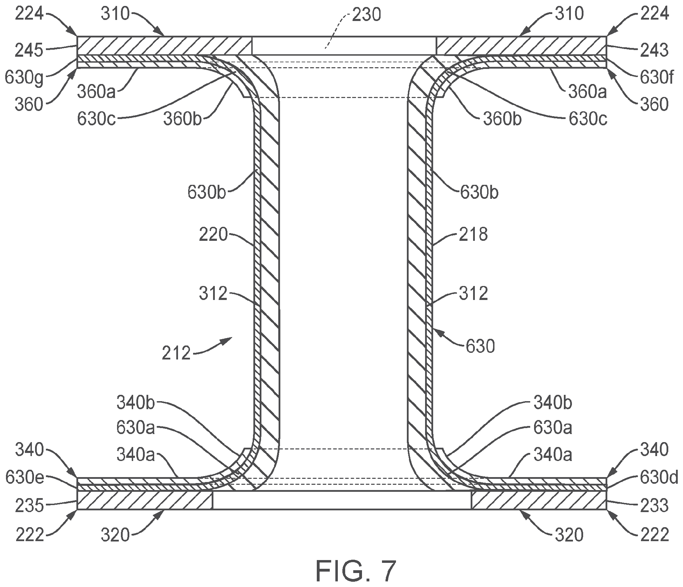

FIG. 6 is a perspective view of a non-limiting exemplary vane comprising wrapped platform ply(s) and/or tucked airfoil ply(s), wherein a tucked airfoil ply comprises tabs. FIG. 7 is a cross sectional view of view FIG. 6. FIG. 3 at location line 7 of FIG. 6. FIG. 6 and FIG. 7 will be discussed together. FIG. 6 and FIG. 7 illustrate a vane 200 in which airfoil tucking ply(s) with tabs 630 is illustrated, and airfoil tucking ply(s) 330 is not illustrated. In FIG. 6, OD platform gaspath distal ply(s) 310 and airfoil gaspath distal ply(s) 312 are omitted for additional clarity. Airfoil tucking ply(s) 630, comprises at least one airfoil tucking ply(s) ID fillet/platform portion 630a, at least one airfoil tucking ply(s) airfoil portion 630b, and at least one airfoil tucking ply(s) OD fillet/platform portion 630c. Airfoil tucking ply also comprises (i) airfoil tucking ply(s) ID platform pressure edge tab portion 630d, which extends from a pressure side-proximal portion of airfoil tucking ply(s) ID fillet/platform portion 630a towards ID platform pressure edge 233, (ii) airfoil tucking ply(s) ID platform suction edge tab portion 630e, which extends from a suction side-proximal portion of airfoil tucking ply(s) ID fillet/platform portion 630a towards ID platform suction edge 235, (iii) airfoil tucking ply(s) OD platform pressure edge tab portion 630f, which extends from a pressure side-proximal portion of airfoil tucking ply(s) OD fillet/platform portion 630c towards OD platform pressure edge 243, and (iv) airfoil tucking ply(s) OD platform suction edge tab portion 630g, which extends from a suction side-proximal portion of airfoil tucking ply(s) OD fillet/platform portion 630c towards OD platform suction edge 245. Although four tabs are illustrated, other numbers, such as one, two, three, or more than four tabs are contemplated. Airfoil tucking ply(s) 630 may optionally be cut and joined, may optionally be comprised of more than one ply, or the like; optionally, airfoil tucking ply(s) 630 is continuous (i) in at least the portion(s) thereof that are tucked under wrapping ply(s), (ii) in at least the portion(s) thereof that wrap over portion(s) of fillet(s) and form tab(a), and/or (iii) any combination of (i) and/or (ii). As can be seen, in this example, most gaspath-proximal airfoil tucking ply(s) 630 is wrapped around a gaspath-proximal side of an airfoil 212 and is tucked into both (i) most gaspath-ID platform wrapping platform ply(s) 340 of ID platform 222 and (ii) most gaspath-proximal ID platform wrapping platform ply(s) 360 of OD platform 224. Likewise, in this example, both (i) most gaspath-proximal ID platform wrapping platform ply(s) 340 of ID platform 222 and (ii) a most gaspath-proximal OD platform wrapping platform ply(s) 360 of OD platform 224 are wrapped around most gaspath-proximal airfoil tucking ply(s) 630, which is wrapped around/forms gaspath-proximal side(s) of airfoil 212.

FIG. 6 and FIG. 7 are not intended to define exact termination points of airfoil tucking ply(s) ID platform fillet portion 630a or airfoil tucking ply(s) OD platform fillet portion 630c, but rather are intended to illustrate a wrapping and/or tucking concept. Likewise, FIG. 6 and FIG. 7 are not intended to define exact termination points of ID platform wrapping ply(s) fillet portion 340b or OD platform wrapping ply(s) fillet portion 360b, but rather are intended to illustrate a wrapping and/or tucking concept. In embodiments (i) airfoil tucking ply(s) ID fillet/platform portion 630a may terminate on ID fillet 226, may extend onto ID platform 222, and/or may vary in length; (ii) airfoil tucking ply(s) OD fillet/platform portion 630c may terminate on OD fillet 228, may extend onto OD platform 224, and/or may vary in length; (iii) ID platform wrapping ply(s) fillet/airfoil portion 340b may terminate on ID fillet 226, may extend onto airfoil 212, or may vary in length; (iv) OD platform wrapping ply(s) fillet/airfoil portion 360b may terminate on OD fillet 228, may extend onto airfoil 212, or may vary in length; and/or (v) any combination of (i), (ii), (iii), and/or (iv). As can be seen, in embodiments, airfoil tucking ply(s) ID platform fillet portion 630a and airfoil tucking ply(s) OD platform fillet portion 630c may extend only into fillet portions of vane 200 and may extend onto platform portions only as tab portion(s) 630d, 630e, 630f, and 630g. Accordingly, in embodiments, ceramic fabric may be cut to form one or more "filler" ply(s) to avoid space, unevenness, and/or distortion of platform ply(s) on either side of airfoil tucking ply(s) 630. Exemplary ID platform leading edge filler ply 650a, ID platform trailing edge filler ply 650b, OD platform leading edge filler ply 655a, and OD platform trailing edge filler ply 655b are illustrated. Filler ply(s) are, however, optional, and fabric distortion may be utilized, as an exemplary alternative. As can also be seen, in embodiments, ID platform wrapping ply(s) fillet portion(s) 340a and OD platform wrapping ply(s) fillet portion(s) 360a may extend only into fillet portions of vane 200 and may not extend onto airfoil portions. An airfoil filler ply(s) is not shown in FIG. 6 and FIG. 7, but, in embodiments, one or more optional filler ply(s) may be employed.

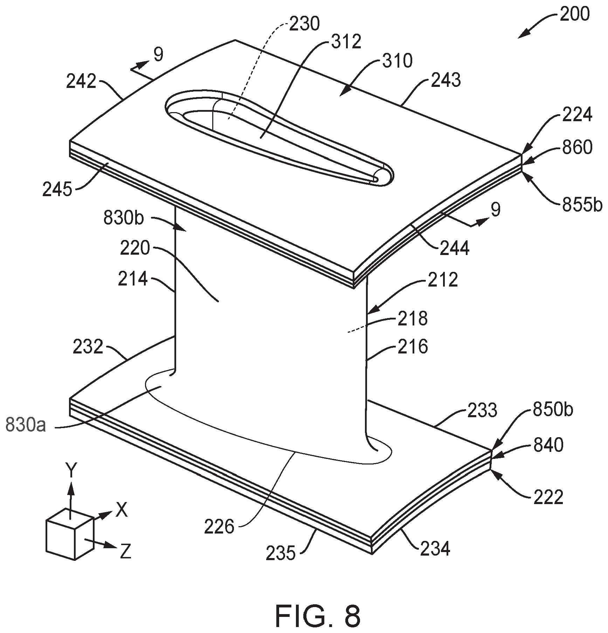

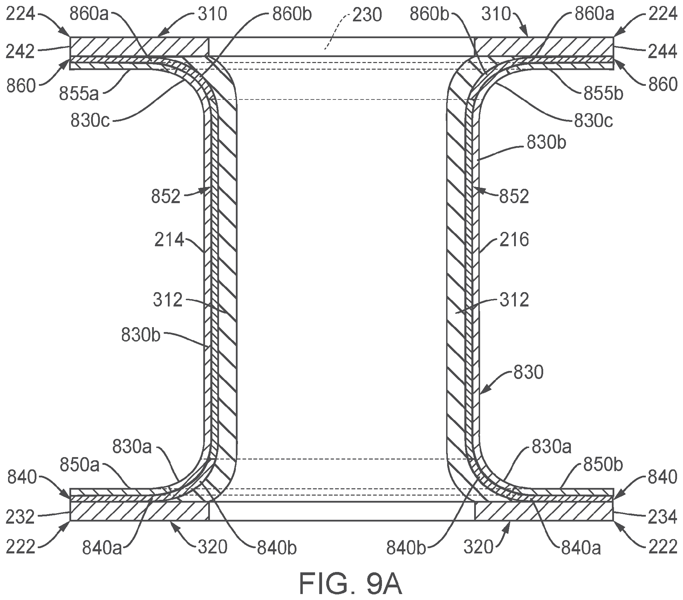

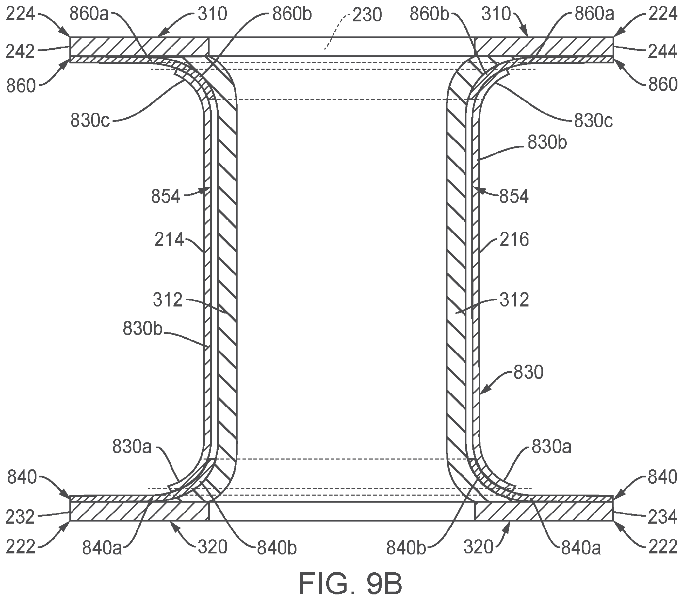

FIG. 8 is a perspective view of a non-limiting exemplary vane comprising tucked platform ply(s) and/or wrapped airfoil ply(s). FIG. 9A is a cross sectional view of view FIG. 8 at location line 9 of FIG. 8. FIG. 9B is a cross sectional view of view FIG. 8 at location line 9 of FIG. 8, with certain structures omitted for additional clarity. FIG. 8, FIG. 9A, and FIG. 9B will be discussed together. FIG. 8, FIG. 9A, and FIG. 9B illustrate airfoil wrapping ply(s) 830, which comprises at least one airfoil wrapping ply(s) ID fillet/platform portion 830a, at least one airfoil wrapping ply(s) airfoil portion 830b, and at least one airfoil wrapping ply(s) OD fillet/platform portion 830c. Airfoil wrapping ply(s) 830 may optionally be cut and joined, may optionally be comprised of more than one ply, or the like; optionally, airfoil tucking ply(s) 830 may be continuous in at least the portion(s) thereof that are tucked under platform wrapping ply(s). Also illustrated are ID platform tucking ply(s) 840, which comprises at least one ID platform tucking ply(s) platform portion 840a and at least one ID platform tucking ply(s) fillet/airfoil portion 840b. ID platform tucking ply(s) 840 may optionally be cut and joined, may optionally be comprised of more than one ply, or the like; optionally, ID platform tucking ply(s) 840 may be continuous in at least the portion(s) thereof that are wrapped over airfoil tucking ply(s). Also illustrated are OD platform tucking ply(s) 860, which comprises at least one OD platform tucking ply(s) platform portion 860a and at least one ID platform tucking ply(s) fillet/airfoil portion 860b. OD platform tucking ply(s) 860 may optionally be cut and joined, may optionally be comprised of more than one ply, or the like; optionally, OD platform tucking ply(s) 860 may be continuous in at least the portion(s) thereof that are wrapped over airfoil tucking ply(s). As can be seen, in this example, most gaspath-proximal airfoil wrapping ply(s) 830 is wrapped around a gaspath-proximal side of airfoil 212 and is tucked into both (i) most gaspath-proximal ID platform tucking platform ply(s) 840 of ID platform 222 and (ii) most gaspath-proximal OD platform tucking platform ply(s) 860 of OD platform 224. Likewise, in this example, both (i) most gaspath-proximal ID platform tucking platform ply(s) 840 of ID platform 222 and (ii) most gaspath-proximal OD platform tucking platform ply(s) 860 of OD platform 224 are wrapped around most gaspath-proximal airfoil wrapping ply(s) 830, which is wrapped around/forms gaspath-proximal side(s) of airfoil 212.

FIG. 8, FIG. 9A, and FIG. 9B are not intended to define exact termination points of airfoil wrapping ply(s) ID platform fillet portion 830a or airfoil tucking ply(s) OD platform fillet portion 830c, but rather are intended to illustrate a wrapping and/or tucking concept. Likewise, FIG. 8, FIG. 9A, and FIG. 9B are not intended to define exact termination points of ID platform tucking ply(s) fillet portion 840b or OD platform wrapping ply(s) fillet portion 860b, but rather are intended to illustrate a wrapping and/or tucking concept. In embodiments (i) ID platform tucking ply(s) fillet/airfoil portion 840a may terminate on ID fillet 226, may extend onto airfoil 212, and/or may vary in length; (ii) OD platform tucking ply(s) fillet/airfoil portion 860b may terminate on OD fillet 228, may extend onto airfoil 212, and/or may vary in length; (iii) airfoil wrapping ply(s) ID fillet/platform portion 830a may terminate on ID fillet 226, may extend onto ID platform 222, or may vary in length; (iv) airfoil wrapping ply(s) OD fillet/platform portion 830c may terminate on OD fillet 228, may extend onto OD platform 224, or may vary in length; and/or (v) any combination of (i), (ii), (iii), and/or (iv). As can be seen, in embodiments, airfoil wrapping ply(s) ID platform fillet portion 830a and airfoil wrapping ply(s) OD platform fillet portion 830c may extend only into fillet portions of vane 200. Accordingly, in embodiments, ceramic fabric may be cut to form one or more "filler" ply(s) to avoid space, unevenness, and/or distortion of platform ply(s) on either side of airfoil wrapping ply(s) 830. In FIG. 8 and/or FIG. 9A, exemplary ID platform leading edge filler ply 850a, ID platform trailing edge filler ply 850b, OD platform leading edge filler ply 855a, and OD platform trailing edge filler ply 855b are illustrated. In embodiments, ID platform leading edge filler ply 850a and ID platform trailing edge filler ply 850b may together form a continuous donut ply. In embodiments, OD platform leading edge filler ply 855a and OD platform trailing edge filler ply 855b may together form a continuous donut ply. As can also be seen, in embodiments, ID platform tucking ply(s) fillet portion(s) 840a and OD platform tucking ply(s) fillet portion(s) 860a may extend only into fillet portions of vane 200 and may not extend onto airfoil portions. Exemplary airfoil filler ply(s) 852 is shown in FIG. 9A. In embodiments, exemplary airfoil filler ply(s) 852 may be continuous, continuous in some portions and not in others, and/or may comprise one or more split and/or joint, which may or may not be, e.g., stitched. In FIG. 9B, ID platform leading edge filler ply(s) 850a, ID platform trailing edge filler ply(s) 850b, OD platform leading edge filler ply(s) 855a, and OD platform trailing edge filler ply(s) 855b are omitted for additional clarity. In FIG. 9B, a "void(s)" or "space(s)" 854 may be seen between airfoil wrapping ply(s) airfoil portion(s) 830b and airfoil gaspath-distal ply(s) 312; however, these voids 854 are for additional clarity only: in practice, airfoil wrapping ply(s) airfoil portion(s) 830b and/or airfoil gaspath-distal ply(s) 312 would, in embodiments, be distorted to fill the void(s) 854. Filler ply(s) are, however, optional, and, in embodiments, fabric distortion may be utilized, as an exemplary alternative.

Gaspath-proximal airfoil wrapping ply(s) 830 may be exemplary of "airfoil wrapped" or "airfoil wrapping" ply(s) and may form an "airfoil wrapped layer" or an "airfoil wrapped layer". Each of gaspath-proximal ID platform tucking ply(s) 840 and OD platform tucking ply(s) 860 may be exemplary of "platform tucked" or "platform tucking" ply(s) and may form a "platform tucked layer" or "platform tucking layer"; collectively, they may be exemplary of "platform tucked layers" or "platform tucking layers". For additional clarity, only exemplary layers are illustrated. Additional wrapped airfoil ply(s), additional tucked platform ply(s), additional untucked platform ply(s), additional unwrapped airfoil ply(s), and/or any combination thereof may be present. As one non-limiting example, layer(s) comprising wrapped airfoil ply(s) and tucked platform ply(s) may alternate with layers comprising unwrapped airfoil ply(s) and untucked platform ply(s). In some embodiments, exemplary wrapped airfoil ply(s) 830 may be one continuous ply that forms an entire, or essentially an entire, airfoil. In some embodiments, exemplary wrapped airfoil layer 830 may be formed by more than one ply, such as, for example, (i) a first airfoil ply extending from airfoil leading edge 214 over airfoil pressure side 218 to or towards airfoil trailing edge 216 and (ii) a second airfoil ply extending from airfoil leading edge 214 over airfoil suction side 220 to or towards airfoil trailing edge 216. Such a first airfoil ply and such a second airfoil ply may be joined in their airfoil portion(s), may be joined in one or more sections, but not in other section(s), or may be unjoined. In some embodiments, exemplary wrapped airfoil layer 830 may be one continuous ply that forms an entire, or essentially an entire, airfoil. In some embodiments, exemplary tucked platform ply(s) 840 and/or exemplary tucked platform ply(s) 860 may independently be formed by one continuous donut ply or may be formed by more than one ply. Plies may be joined, may be joined in some sections(s) but not in other section(s), or may be unjoined.

It will be understood that tab(s) may optionally be utilized with vane(s) comprising tucked platform ply(s) and/or wrapped airfoil ply(s), although tabs are not illustrated in FIG. 8 or FIG. 9.

In embodiments, it is also contemplated that (a) layer(s) comprising (i) tucked airfoil ply(s) (such as, for example, shown as ply(s) 330) and/or (ii) wrapped platform ply(s) (such as, for example, shown as ply(s) 340 and/or 360) may be combined in one or more single vane(s) with (b) layer(s) comprising (i) wrapped airfoil ply(s) (such as, for example, shown as ply(s) 830) and/or (ii) tucked platform ply(s) (such as, for example, shown as ply(s) 840 and/or 860). Tab ply(s) may also be employed. Untucked and/or unwrapped ply(s) may be employed. In the illustrated embodiments showing a tucked and/or wrapped layer, both the OD platform-airfoil interface and the ID platform-airfoil interface are shown to comprise wrapped and/or tucked layers. However, it is contemplated that, in embodiments, only one of either the OD platform-airfoil interface or the ID platform-airfoil interface may comprise wrapped and/ort tucked layers. Similarly, it is also contemplated that, in embodiments, any given layer "A" of one or more single vane(s) may comprise one or more wrapped and/or tucked ply(s) at the ID platform-airfoil interface and one or more unwrapped and/or untucked ply(s) at the OD platform-airfoil interface, while another layer "B" of the same single vane(s) may comprise one or more wrapped and/or tucked ply(s) at the OD platform-airfoil interface and one or more unwrapped and/or untucked ply(s) at the ID platform-airfoil interface. Still other configurations are contemplated, in some embodiments. One or more of each of such ply(s)/layer(s) may be employed in one or more single vane(s) in any order. In some embodiments, the most gaspath proximal layer may be comprised of wrapped and/or tucked plies.

It will be appreciated that, for simplicity of illustration, exemplary plies, tabs, layers, and the like are illustrated in the Figures. One of ordinary skill in the art will recognize that additional plies, tabs, layers, and the like may be present in embodiments. It will be appreciated that each airfoil and each platform, and each ply and or layer forming a portion or a whole of an airfoil and/or both (i.e., forming one or more portions of each) will have a gaspath-proximal and a gaspath-distal side and/or surface. For additional clarity, not all such sides and/or surfaces have been labelled. It will be understood that referring to FIGS. 2A, 3, 5, 6, and 8 the most gaspath-distal region of the airfoil is gaspath distal inner core 230; for any given structure or location, the farther it is located on the X-axis an or Z-axis from the gaspath distal inner core 230, the more gaspath-proximal the structure or location is. Following the Y-axis, where OD platform 224 defines a "top" of vane 200, and ID platform 222 defines a "bottom" of vane 200: the top surface of OD platform 224 and the bottom surface of ID platform 222 are gaspath-distal; and the bottom surface of OD platform 224 and the top surface of ID platform 222 are gaspath-proximal.

In an exemplary embodiment, a method of forming a ceramic matrix composite (CMC) vane including an inner diameter platform, an outer diameter platform, and an airfoil extending between the inner diameter platform and the outer diameter platform may include laying up a ceramic preform by arranging one or more ceramic fibers and/or one or more ceramic fabrics to form a preform having a desired shape. Typically, plies (sheets) of ceramic fabric may be wrapped around a suitably shaped mandrel to create a general shape of an airfoil having at least one hollow core. The the rest of the preform for the vane component may be built outwards from the airfoil. Additional ceramic materials, such as inserts (e.g., "noodles") can be incorporated, as necessary or desirable, into a preform. A tackifier composition of a polymer material in solution (e.g., polyvinyl alcohol in water, polyvinyl butyral in ethanol, etc.) can be applied to any of the fabrics, as needed, to facilitate handling and stabilization of a preform through subsequent processing.

Special tooling, as is known in the art, may be used to guide the layup of fabric plies to create a preform for a CMC vane. The exact order of operations may be determined during a manufacturing trial, but technicians typically may use tools/tooling made from plastic or metal to layup plies to create platforms the preform, with one or more overwrap plies being applied last. The completed preform may then be put into specialized tooling to hold its shape during the densification/reinforcement/infiltration processes that may be used to complete manufacture of the CMC vane.

A preform can be optionally debulked before densification with matrix to form the final CMC component. In embodiments, one or more portion of one or more tab ply may extend beyond the remainder of the preform. Such extending portions may be trimmed off prior to and/or after densification. Densification can be carried out using chemical vapor infiltration (CVI). Other densification techniques are contemplated herein, such as one or a combination of slurry infiltration, melt infiltration, and polymer infiltration and pyrolysis. Such techniques can supplement the CVI process. Protective coatings for the CMC component (e.g., thermal barrier coatings, environmental barrier coatings (EBC), etc.) can optionally be applied after densification.

In exemplary embodiments, ceramic fabrics may include ceramic fibers arranged in one of various two or three-dimensional architectures. In exemplary embodiments, ceramic fabrics may include ceramic fabrics with braided architecture (such as, e.g., bi- and/or triaxial braided architecture), ceramic fabrics with knit architecture, and/or ceramic fabrics with weave architecture. Non-limiting examples of woven ceramic fabric include a two-dimensionally woven ceramic fabric, such as 8-harness satin weave, other satin weaves (3-, 5-, 10-harness, etc.), plain weaves, and/or twill weaves. Ceramic comprising non-woven (e.g., chopped, felted, etc.) fibers are also contemplated herein. Uniaxial ceramic fiber architectures are also contemplated herein. In some embodiments, (i) one or more wrapped or tucked airfoil layer may comprise one or more woven and/or braided ceramic fabric; (ii) one or more wrapped or tucked ID platform layer may comprise one or more two-dimensional and/or three-dimensional woven ceramic fabric; (iii) one or more wrapped or tucked OD platform layer may comprise one or more two-dimensional and/or three-dimensional woven ceramic fabric; and/or (iv) any combination of (i), (ii), and/or (iii).

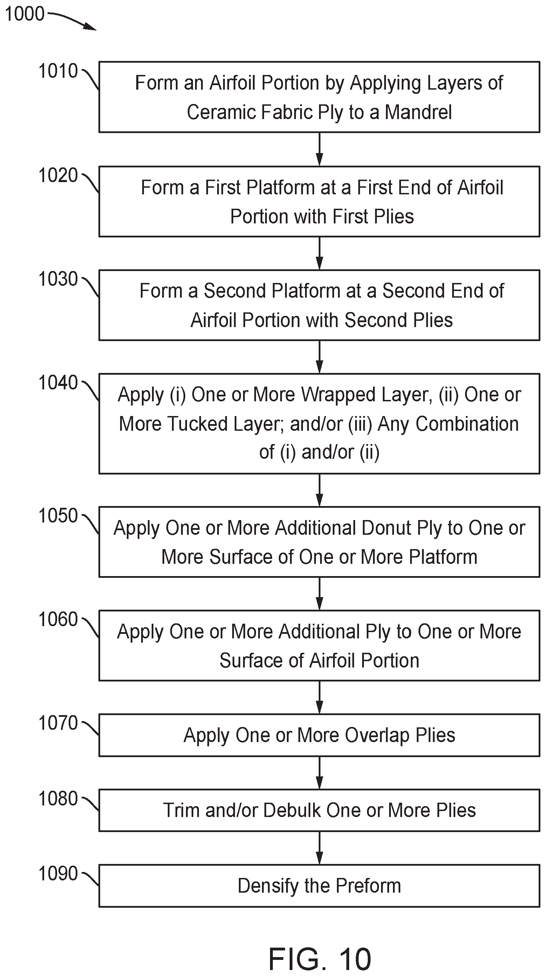

One or more embodiments of the present disclosure further relate to a method 1000 of forming a CMC vane 200. Referring to FIG. 10, in an embodiment, the method 1000 may include a step 1010 of forming an airfoil portion 212 by applying layers of ceramic fabric ply to a mandrel to form an airfoil portion of a preform.

Method 1000 may further include a step 1020 of forming a first platform at a first end of airfoil portion 212 of the preform with one or more plies, which may optionally be donut plies, such that airfoil portion 212 extends from the first platform. The first platform can be ID platform 222 or OD platform 224. In a step 1030, a second platform may be formed at a second end of airfoil portion 212 of the preform with one or more plies, which may optionally be donut plies, such that airfoil portion 212 extends between the first platform and the second platform. The second platform can be ID platform 222 or OD platform 224. It will be appreciated that when the first platform is ID platform 222, the second platform is preferably OD platform 224; and when the first platform is OD platform 224, the second platform is preferably ID platform 222; however, two relatively uncurved platforms are also contemplated.

In a step 1040, (i) one or more wrapped layer, (ii) one or more tucked layer; and/or (iii) any combination of (i) and/or (ii) may be applied to one or more surface more and/or most gas-proximal surfaces of the preform.

In an optional step 1050, one or more additional platform (optionally donut) ply may be applied to one or more surface of one or each of the first platform and/or the second platform of the preform.

In an optional step 1060, one or more additional ply may be applied to one or more surface of airfoil portion 212 of the preform.

Steps 1040, 1050, and 1060 may be performed in any order and may optionally be repeated independently in any order. However, in some embodiments, one ore more iteration of step 1040 may be performed without one and/or each of step 1050 and/or step 1060 being performed thereafter.

In an optional step 1070, one or more overwrap plies may be applied to one or more surfaces of at least a portion of one or more of the first platform, the second platform, and/or airfoil portion 212 of the preform; overwrap ply(s) applied in step 1070 may form one or more gaspath surfaces of a vane. In some embodiments, step 1070 may not be performed, and a layer formed in one or more iteration of step 1040 may form one or more gaspath surfaces of a vane.

In an optional step 1080, one or more plies of the preform may be trimmed and/or debulked.

In step 1090, the preform may be densified.

The below-described advantages and/or other advantages may result from the compositions and/or processes described herein. However, it should be understood that the disclosure is directed to the described composition and/or processes, regardless of whether the below-described and/or other advantages are achieved.

One or more airfoil-platform components comprising at least one wrapped layer and/or tucked layer may exhibit reduced and/or eliminated probability of unwrapping of one or more layers, opening/splitting of one or more joint, and/or similar failures, in airfoil(s) associated with one or more platforms, as compared to one or more airfoil(s) associated with one or more platforms that lack such wrapping and/or tucking of plies.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope and spirit of the present disclosure.

## Claims

1. A ceramic matrix composite (CMC) component or a preform for making a CMC component, comprising:
a first platform (222) having a first gaspath-proximal surface and a first gaspath-distal surface;
at least one first airfoil (214) extending from the first platform gaspath-proximal surface, the first airfoil having a first gaspath-proximal surface and a first gaspath-distal core; the first platform and the first airfoil forming at least a first fillet (226) at at least one interface between the first platform and the first airfoil; and
the first platform comprising one or more ply, wherein at least one of the one or more ply is at least one first wrapped ply (340), wherein at least one of the at least one first wrapped ply comprises at least one first platform portion (340a) forming at least a portion of the first platform and at least one first fillet/airfoil portion (340b) forming at least a portion of the first fillet;
the at least one first airfoil comprising one or more ply, wherein at least one of the one or more ply is at least one first tucked ply (330), wherein at least one of the at least one first tucked ply comprises at least one first airfoil portion (330b) forming at least a portion of the airfoil and at least one first fillet/platform portion (330a) forming at least a portion of the first fillet; wherein
at least a portion of the fillet/platform portion of the first wrapped ply overlaps at least a portion of the fillet/airfoil portion of the of the first tucked ply on the gaspath-proximal side of the first tucked ply, such that at least a portion of the first wrapped ply is gaspath proximal to at least a portion of the first tucked ply, forming at least one first overlap section, wherein at least one portion of the at least one first overlap section forms at least one portion of the first fillet, and/or at least one portion of the at least one first overlap section has a length that is at least 5 times to at least 15 times the thickness of at least one ceramic fabric forming the first overlap section.

2. The component or preform of claim 1, wherein at least one tucked ply further comprises at least one tab portion extending onto the platform farther than the first overlap section extends.

3. The component or preform of claim 1 or 2, further comprising:
a second platform (224) having a second gaspath-proximal surface and a second gaspath-distal surface; wherein
at least the first airfoil extends from the first platform gaspath-proximal surface to the second platform gaspath-proximal surface; the second platform and the first airfoil forming at least a second fillet (228) at at least one interface between the second platform and the first airfoil; and
the second platform comprising one or more ply, wherein at least one of the one or more ply is at least one second wrapped ply (360), wherein at least one of the at least one second wrapped ply comprises at least one second platform portion (360a) forming at least a portion of the second platform and at least one second fillet/airfoil portion (360b) forming at least a portion of the second fillet;
the first tucked ply further comprising at least one second fillet/platform portion (330c) forming at least a portion of the second fillet; wherein
at least a wrapped portion of the second fillet/airfoil portion of the second wrapped ply overlaps at least a portion of the fillet/platform portion of the second tucked ply on the gaspath-proximal side of the second tucked ply, such that at least a portion of the second wrapped ply is gaspath proximal to at least a portion of the second tucked ply, forming at least one second overlap section, wherein at least one portion of the at least one second overlap section forms at least one portion of a fillet portion, and/or at least one portion of the at least one second overlap section has a length that is at least 5 times to at least 15 times the thickness of at least one ceramic fabric forming the second overlap section.

4. The component or preform of claim 3, wherein at least one tucked ply further comprises at least one tab portion extending onto the platform farther than the second overlap section extends.

5. A ceramic matrix composite (CMC) component or a preform for making a CMC component, comprising:
a first platform having a first gaspath-proximal surface and a first gaspath-distal surface;
at least one first airfoil extending from the first platform gaspath-proximal surface, the first airfoil having a first gaspath-proximal surface and a first gaspath-distal core; the first platform and the first airfoil forming at least a first fillet at at least one interface between the first platform and the first airfoil; and
the first platform comprising one or more ply, wherein at least one of the one or more ply is at least one first tucked ply, wherein at least one of the at least one first tucked ply comprises at least one first platform portion forming at least a portion of the first platform and at least one first fillet/airfoil portion forming at least a portion of the first fillet;
the at least one first airfoil comprising one or more ply, wherein at least one of the one or more ply is at least one first wrapped ply, wherein at least one of the at least one first wrapped ply comprises at least one first airfoil portion forming at least a portion of the airfoil and at least one first fillet/platform portion forming at least a portion of the first fillet; wherein
at least a portion of the first fillet/platform portion of the first wrapped ply overlaps at least a portion of the first fillet/airfoil portion of the of the first tucked ply on the gaspath-proximal side of the first tucked ply, such that at least a portion of the first wrapped ply is gaspath proximal to at least a portion of the first tucked ply, forming at least one first overlap section, wherein at least one portion of the at least one first overlap section forms at least one portion of the first fillet, and/or at least one portion of the at least one first overlap section has a length that is at least 5 times to at least 15 times the thickness of at least one ceramic fabric forming the first overlap section.

6. The component or preform of claim 5, wherein at least one wrapped ply further comprises at least one tab portion extending onto the platform farther than the first overlap section extends.

7. The component or preform of claim 5 or 6, further comprising:
a second platform having a second gaspath-proximal surface and a second gaspath-distal surface; wherein
at least the first airfoil extends from the first platform gaspath-proximal surface to the second platform gaspath-proximal surface; the second platform and the first airfoil forming at least a second fillet at at least one interface between the second platform and the first airfoil; and
the second platform comprising one or more ply, wherein at least one of the one or more ply is at least one second tucked ply, wherein at least one of the at least one second tucked ply comprises at least one second platform portion forming at least a portion of the second platform and at least one second fillet/airfoil portion forming at least a portion of the second fillet;
the first wrapped ply further comprising at least one second fillet/platform portion forming at least a portion of the second fillet; wherein
at least a portion of the second fillet/platform portion of the first wrapped ply overlaps at least a portion of the second fillet/airfoil portion of the of the second tucked ply on the gaspath-proximal side of the second tucked ply, such that at least a portion of the first wrapped ply is gaspath proximal to at least a portion of the second tucked ply, forming at least one second overlap section, wherein at least one portion of the at least one second overlap section forms at least one portion of the second fillet, and/or at least one portion of the at least one second overlap section has a length that is at least 5 times to at least 15 times the thickness of at least one ceramic fabric forming the second overlap section,
wherein, optionally, at least one wrapped ply further comprises at least one tab portion extending onto the platform farther than the second overlap section extends.

8. A method of forming a ceramic matrix composite (CMC) component, comprising:
(a) forming a first airfoil by applying one or more ceramic fabric plies to a mandrel, the first airfoil having a first gaspath proximal surface and a first gaspath distal core; and
(b) forming a first platform at a first end of the first airfoil by applying one or more ceramic fabric plies; the first platform having a first gaspath proximal surface with the first airfoil extending therefrom and a first gaspath distal surface opposite the first gaspath proximal surface; the first platform first gaspath proximal surface and the first airfoil first gaspath proximal surface forming a first fillet at an interface formed therebetween.

9. The method of claim 8, further comprising:
(c) applying at least one first airfoil tucking ply to the first airfoil, the first airfoil tucking ply comprising (A) at least one airfoil portion forming at least a portion of the first airfoil, (B) at least one first tucking portion that extends at least onto the first fillet; and
(d) applying at least one first platform wrapping ply to the first platform, the first platform wrapping ply comprising (A) at least one platform portion forming at least a portion of the first platform and (B) at least one first wrapping portion that extends at least onto the first fillet and extends gaspath proximal over at least a portion of the first tucking portion, forming at least one first overlap section, wherein at least one portion of the at least one first overlap section forms at least one portion of the first fillet, and/or at least one portion of the at least one first overlap section has a length that is at least 5 times to at least 15 times the thickness of at least one ceramic fabric forming the first overlap section.

10. The method of claim 8, further comprising:
(c) applying at least one first platform tucking ply to the first platform, the first platform tucking ply comprising (A) at least one platform portion forming at least a portion of the first platform and (B) at least one first tucking portion that extends at least onto the first fillet; and
(d) applying at least one first airfoil wrapping ply to the first airfoil, the first airfoil wrapping ply comprising (A) at least one airfoil portion forming at least a portion of the first airfoil, (B) at least one first wrapping portion that extends at least onto the first fillet and extends gaspath proximal over at least a portion of the first tucking portion, forming at least one first overlap section, wherein at least one portion of the at least one first overlap section forms at least one portion of the first fillet, and/or at least one portion of the at least one first overlap section has a length that is at least 5 times to at least 15 times the thickness of at least one ceramic fabric forming the first overlap section.

11. The method of claim 9 or 10, further comprising (e) applying at least one nontucking and nonwrapping ply to the first airfoil, and/or applying at least one nontucking and nonwrapping ply to the first platform and/or to the second platform.

12. The method of claim 9, 10 or 11, further comprising repeating any combination of (c), (d), and/or (e) independently one or a plurality of times.

13. The method of claim 8, further comprising: (c) forming a second platform at a second end of the first airfoil by applying one or more ceramic fabric plies; the second platform having (i) a second gaspath proximal surface with the first airfoil extending therefrom and (ii) a second gaspath distal surface opposite the second gaspath proximal surface; the second platform second gaspath proximal surface and the first airfoil first gaspath proximal surface forming a second fillet at their interface; the first airfoil extending between the first gaspath proximal surface of the first platform and the second gaspath proximal surface of the second platform.

14. The method of claim 13, further comprising:
(d) applying at least one first airfoil tucking ply to the first airfoil, the first airfoil tucking ply comprising (A) at least one airfoil portion forming at least a portion of the first airfoil, (B) at least one first tucking portion that extends at least onto the first fillet; and
(e) applying at least one first platform wrapping ply to the first platform, the first platform wrapping ply comprising (A) at least one platform portion forming at least a portion of the first platform and (B) at least one first wrapping portion that extends at least onto the first fillet and extends gaspath proximal over at least a portion of the first tucking portion, forming at least one first overlap section, wherein at least one portion of the at least one first overlap section forms at least one portion of the first fillet, and/or at least one portion of the at least one first overlap section has a length that is at least 5 times to at least 15 times the thickness of at least one ceramic fabric forming the first overlap section,
wherein, optionally:
the first airfoil tucking ply further comprises (C) at least second tucking portion that extends at least onto the second fillet;
the method further comprising: (f) applying at least one second platform wrapping ply to the second platform, the second platform wrapping ply comprising (A) at least one platform portion forming at least a portion of the second platform and (B) at least one second wrapping portion that extends at least onto the second fillet and extends gaspath proximal over at least a portion of the second tucking portion, forming at least one second overlap section, wherein at least one portion of the at least one second overlap section forms at least one portion of the second fillet, and/or at least one portion of the at least one second overlap section has a length that is at least 5 times to at least 15 times the thickness of at least one ceramic fabric forming the second overlap section,
wherein, further optionally, the method further comprises (g) applying at least one nontucking and nonwrapping ply to the first airfoil and/or applying at least one nontucking and nonwrapping ply to the first platform and/or to the second platform.

15. The method of claim 13, further comprising:
(d) applying at least one first platform tucking ply to the first platform, the first platform tucking ply comprising (A) at least one platform portion forming at least a portion of the first platform and (B) at least one first tucking portion that extends at least onto the first fillet;
(e) applying at least one second platform tucking ply to the second platform, the second platform tucking ply comprising (A) at least one platform portion forming at least a portion of the second platform and (B) at least one second tucking portion that extends at least onto the second fillet; and
(f) applying at least one first airfoil wrapping ply to the first airfoil, the first airfoil wrapping ply comprising (A) at least one airfoil portion forming at least a portion of the first airfoil, (B) at least one first wrapping portion that extends at least onto the first fillet and extends gaspath proximal over at least a portion of the first tucking portion, forming at least one first overlap section, and (C) at least second wrapping portion that extends at least onto the second fillet and extends gaspath proximal over at least a portion of the second tucking portion, forming at least one second overlap section; wherein:
at least one portion of the at least one first overlap section forms at least one portion of the first fillet, and/or at least one portion of at least one first overlap section has a length that is at least 5 times to at least 15 times the thickness of at least one ceramic fabric forming the first overlap section; and/or
at least one portion of the at least one second overlap section forms at least one portion of the second fillet, and/or at least one portion of at least one second overlap section has a length that is at least 5 times to at least 15 times the thickness of at least one ceramic fabric forming the second overlap section.
